# EUROPÄISCHE PATENTSCHRIFT

(11) **EP 0 800 486 B1**
(45) Veröffentlichungstag und Bekanntmachung des Hinweises auf die Patenterteilung: **26.05.1999**
(21) Anmeldenummer: 95941577.9
(22) Anmeldetag: 15.11.1995
(51) Int. Cl.: C03B 7/086, C03B 5/167

(54) **DREHPLUNGER FÜR GLASAUSLAUFÖFFNUNGEN**
ROTARY PLUNGERS FOR GLASS OUTLET OPENINGS
PISTONS ROTATIFS POUR ORIFICES DE SORTIE DE VERRE

(30) Priorität: 15.11.1994 DE 4440702
(43) Veröffentlichungstag der Anmeldung: 15.10.1997
(73) Patentinhaber: Technische Glaswerke Ilmenau GmbH, 98693 Ilmenau (DE); Degussa Aktiengesellschaft, 63450 Hanau (DE)
(72) Erfinder: KÜMMERLING, Andreas, D-98693 Ilmenau (DE); SCHWIEGER, Christian, D-98693 Ilmenau (DE); HEYM, Volker, D-98693 Ilmenau (DE); STIEBERT, Dietmar, 98693 Illmenau (DE); ECKERT, Wilfried, 63549 Ronneburg (DE); GÖLITZER, Hubertus, 63755 Alzenau (DE)
(74) Vertreter: Liedtke, Klaus, Dr.
(86) Internationale Anmeldenummer: DE9501583
(87) Internationale Veröffentlichungsnummer: WO9615072

(56) Entgegenhaltungen:
- DE-A- 1 916 817
- DE-A- 4 202 278
- DE-A- 4 326 143
- FR-A- 831 332
- US-A- 3 332 766
- GLASS TECHNOLOGY, Bd. 32, Nr. 4, August 1991 SHEFFIELD,GB, Seiten 116-118, XP 000219538 F.M.HAEPE 'process improvements in hand made and semi automatic domestic glass production'

## Beschreibung

Die Erfindung betrifft den konstruktiven Aufbau von Drehplungern zum portionsweisen Ausstoßen von schmelzflüssigem Glas durch Glasauslauföffnungen mittels einer Drehbewegung mit gleichzeitiger periodischer Vertikalbewegung.

Plungervorrichtungen zum portionsweisen Ausstoßen von Glasposten sind notwendig zur Herstellung von Hohlglas- und Preßglasartikeln. Die aus keramischen Feuerfestermaterialien bestehenden einfach zylindrischen Plunger führen eine reine Vertikalbewegung aus bzw. wandeln über eine Kurvenscheibe die Rotationsbewegung in eine Vertikalbewegung um. Diese Plunger wurden in den letzten Jahrzehnt durch Plungervorrichtungen ersetzt, die im Glas-Kontaktbereich eine Hülle aus Edelmetall bzw. einer Edelmetallegierung über den keramischen Feuerfestmaterialien besitzen und einen unter Luftsauerstoffausschluß befindlichen Kern aus Molybdän, Wolfram oder einer Legierung dieser Metalle beinhalten.
Zur Erreichung von großen Gewichtunterschieden der Glasposten sind die Drehplunger mit ein oder mehreren Schraubengängen versehen, so daß je nach Drehzahl, Drehrichtung und Vertikalbewegung der Plunger das Glas in der Auslaufdüse auf- bzw. abwärts gefördert und z. T. ausgestoßen wird. Da dieses Bewegungswechselspiel der Drehplunger an deren Fertigung und an die Plungerwerkstoffe hahe Qualitätsanforderungen stellt, ist ein optimaler konstuktiver Aufbau, der eine lange Standzeit gewährleistet, nur durch großen Aufwand erreichbar.
In den Schriften DE-A1-43 26 143 und DE-B1-19 16 817 werden solche Plunger beschrieben, die den Stand der Technik darstellen.

In der DE-A1-43 26 143 ist dargelegt, daß Plungergeräte für geschmolzenes Glas aus einem Kern aus Molybdän oder Wolfram und einem Überzug aus Platin odereiner platinreichen Legierung bestehen.
Die DE-B1-19 16 817 für Plunger- und Rührergeräte gibt an, daß der Raum zwischen dem Molybdänkern, der mit einem feuerfesten Stoff überzogen ist, und der Hülle aus Platin oder einer Platinlegierung mit einem gegen Molybdän, den feuerfesten Stoff und Platin inerten Gas gefüllt ist.

Als nachteilig hat sich bei diesen Lösungen der Schichtenaufbau mit tragendem Molybdänkern erwiesen, da eine Beschädigung der Edelmetallschicht, speziell mechanische Zerstörungen bzw. schlecht ausgeführte Schweißnähte, zur Zerstörung des Molybdäns und zu einem Ausfall des Drehplungers führen. Sehr ungenügend ist die mechanische Festigkeit, wenn der Plunger mehreren schroffen Temperaturwechseln ausgesetzt ist ; ein Bruch bzw. anderweitige Zerstörungen des tragenden Molybdänkerns sind wahrscheinlich.

Weiterhin ist nach der DE-A1-42 02 278 eine Vorrichtung zur Erzeugung von Glasschmelze-Fortionen bekannt, bei der der Plunger aus porösem Material, insbesondere aus Keramik besteht. Durch eine Vakuumquelle wird unterhalb des Schmelzpegels in den Grenzflächenbereichen zwischen Plunger und Glasschmelze ein Saugvakuum wirksam, um entstehende Gase aus der schmelze abzuziehen. Der Nachteil dieser Vorrichtung besteht darin, daß sie aus einem porösen keramischen Material besteht und nur eine begrenzte Haltbarkeit für die hohe Beanspruchung des Glasaustrages besitzt, Da Edelmetall nicht eingesetzt wird, weist der Drehplunger aufgrund des Materials und seiner Hub- und Drehbewegung einen außerordentlichen hohen Verschleiß auf.

In der Patentschrift US-A-3332766 ist eine nadelförmige Konstruktion eines Tauch-Druckkolbens für Flüssigkeiten hoher Temperaturen, z. B. geschmolzenes Glas beschrieben. Diese nadelförmige Hülse der Kolbenkonstuktion besteht zum Eintauchen in die Hochtemperaturflüssigkeit aus einer hitzebeständigen Platin- Rhodiumlegierung. Die zylinderförmige Metallhülse besitzt im Inneren Längsverbindungsstege für die Aufteilung in mehrere Kammern, Öffnungen als Verbindung zwischen den Kammern und zur Entlüftung und Kühlung sowie eine Verschlußspitze an ihrem unteren Ende. Die nadelförmige Hülse ist über Stifte und ein Verbindungselement mit einem Kolbenschaft verbunden. Diese Kolbenkonstruktion dient zur Kontrolle und zum Verschluß einer Auslauföffnung für eine Schmelzanlage von Glas und zur gleichmäßigen Einstellung des Glasausflußes. Die Kolbenvorrichtung rotiert nicht, sie ist feststehend und dient nicht zur zwangsweisen Förderung von Flüssigkeiten. Die horizontalen Stifte sowie die Schweißnaht zeigen, daß die gesamte Konstruktion aus zwei Hauptteilen besteht.

Nach der Pat.Abstr. of Japan, IP C - 357, June 27, 1986 Nr. 61-36123 (A) Appl. No. 59-156064 ist ein Plunger im Schichtaufbau bekannt, der aus Molybdän als tragenden, Kern, mit einer dünnen Al-Schicht von ca 0,2 ...0,4 mm Dicke als Schutz besteht, worauf eine Keramikschicht zur Aufnahme einer hitzebeständigen Schicht aus Platin von ca 1 ... 3 mm Dicke aufgebracht ist.
Der Nachteil dieses Plungers besteht in seinem komplizierten Aufbau, wodurch seine leichte Verschleißanfälligkeit bedingt ist und damit bei Undichtheit der Schichten des Verdampfen von Molybdän.
Ein weiterer bekannter Plunger entsprechend der Pat. Abstr. of Japan, IP C - 159, March 30, 1983 Nr. 58-9830 (A), Appl. No. 56-106451 besteht aus einem Vollstab aus Platin oder einer Platin-Rhodium-Legierung mit angebrachter Schraube, deren Enden zur zusätzlichen Stabilität gebogen sind. Da diese Konstruktion sehr materialintensiv ist, ist ihr hoher Materialverbrauch nachteilig und teuer.

Aus der Praxis, aus Prospektmaterial und der Literatur (Glastechnische Berichte 65, 1992 Nr. 4, S. 99 u. ff) ist der Einsatz von feinkornstabilisiertem und dispersionsgehärtetem Platin oder entsprechenden Platinlegierungen für die Zwecke der Glasherstellung bekannt. Rührer, Plunger oder andere Homogenisierungseinrichtungen für Glasschmelzen sowie Zentrifugen oder Düsen für die Glasfasernherstellung sind vorzugsweise aus diesen feinkornstabilisierten dispersionsverfestigten Edelmatallen oder Edelmetall-Legierungen, speziell Platin oder Platin-Rhodium-Legierungen hergestellt.

Gemäß der vorliegenden Erfindungen besteht die Aufgabe, Drehplunger anhand von Grundbauteilen so aufzubauen, daß nur Bauteile aus Edelmetall bzw. einer Edelmetallegierung mit geringen Gewichtsanteilen eingesetzt sind und eine hohe Lebensdauer der Plunger bei gleichbleibender Konstanz des Glaspostengewichts erreicht wird.

Erfindungsgemäß wird die Aufgabe dadurch gelöst, daß die Drehplunger mit all ihren tragenden Bauteilen und Grundbauteilen als hohle Gerüstkonstruktion ausschließlich aus Edelmetall bzw. einer Edelmetallegierung der Pt-Gruppe aufgebaut und gegebenenfalls mit einer zusätzlichen keramischen Sintermasse gefüllt sind.
Zur Minimierung der Edelmetallmengen ist ihr konstuktiver Aufbau so ausgeführt, daß die Wanddicken aller Bauteile zwischen 0,5 und 2,5 mm liegen und diese Bauteile aus feinkornstabilisertem bzw. dispersionsverfestigtem Platin bzw. Platin/Rhodiumlegierungen bestehen.

Die Drehplunger sind nach bekannten Lösungen an einer rotierenden und vertikal auf- und abwärts bewegenden Drehplungerhaltung befestigt, ein Auswechseln der Plunger ist somit problemlos durchführbar.

Der Plungerschaft ist erfindungsgemäß als Drehplungerkernshaft ausgebildet und stellt ein dünnwandiges zylindrisches Rohr dar, das sich über die gesamte Plungerlänge erstreckt. Der Durchmesser des Drehplungerkernschaftes d beträgt vorzugsweise ¼ bis 1/3 des Durchmessers eines Schraubengangzylinders D. In Höhe der Übergansstelle der horizontalen zur vertikalen Glasfließrichtung kann sich eine kegelförmige Abschrägung als Durchmessererweiterung vom Drehplungerkernshaft zum Schraubengangzylinder mit einem Übergangswinkel a von vorzugsweise kleiner 45° befinden. Gemäß der Erfindung ist der durchgehende Drehplungerkernschaft mit dem Schraubengangzylinder, der die Schraubengänge aufnimmt, an dessen Enden und durch stabilisierende Rohre und Profile befestigt.

Die Schraubengangzylinderbefestigung ist erfindungsgemäß mit zylindrischen Rohren, bandförmigen Profilen oder anderen konturenförmigen Profilen realisiert, die durch den Drehplungerkernshaft bis zur Oberfläche des Schraubengangzylinders reichen. Diese stabilisierenden Rohre und/oder Profile sind an ihren Enden verschlossen und an der Schraubengangzylinderoberfläche mit dieser verbunden. Die Anordnung der stabilisierenden Rohre und/oder Profiele richtet sich nach der Anzahl und dem Winkel der Schraubengänge. Vorzugsweise stellt die Erfindung eine solche Anordnung der stabilisierenden Rohre und/oder Profile dar, bei der die Schraubengänge eine Befestigung auf allen Enden der stabilisierenden Rohre und Profile auf der Schraubengangzylinderoberfläche besitzen. Diese Anordnungsart empfiehlt sich vorzugsweise bei ein- bzw. bei Schraubengängen. Werden drei und mehrere Schraubengänge des Plungers zum portionsweisen Ausstoßen benötigt, so sind vorzugsweise die Schraubengänge nach den verfahrenstechnischen Forderungen des Ausstoßens angebracht, ohne daß ihre Befestigung auf den Enden der stabilisierenden Rohre und Profile nötig ist. Bei dieser nicht zuordbaren Anordnung der Schraubengänge auf der Schraubengangzylinderoberfläche ist in bezug auf die Lage der stabilisierende Rohre und Profile vorzugsweise auch eine gegenläufige Befestigung der Schraubengänge zu diesen möglich. Das bedeutet, daß unabhängig von der Lage der stabilisierenden Rohre und/oder Profile die Schraubengänge auf der Schraubengangzylinderoberfläche an beliebigen Stellen befestigt sind.
Der Drehplungerkernshaft ist vorzugsweise am unteren Ende wenige mm länger als der Schraubengangzylinder, ist mit diesem über eine Bördelkante verschweißt und zusätzlich durch einen bzw. mehrere Stifte gesichert. Diese Stifte sind an ihren Enden abgeflacht ausgebildet und ragen über den Drehplungerkernschaft hinaus, so daß die abgeflacht ausgebildeten und rechtwinklig zum Drehplungerkernshaft eingebauten Stifte eine zusätzliche Homogenisierung im unteren Auslaufdüsenbereich ermöglichen. Bei winkliger Stellung der Stiftenden ist eine zusätzliche geringe aufwärts- bzw. abwärtsfördernde Bewegung des auszustoßenden Glases gegeben. Die gleiche Befestigung ist an der oberen Verbindung des Drehplungerkernschaftes mit dem Schraubengangzylinder möglich. Zur weiteren Erhöhung der Drehplungerfestigkeit und zur Vermeidung von Verformungen hauptsächlich des Schraubengangzylinders ist vorzugsweise der verbleibende Hohlraum zwischen Drehplungerkernschaft und Schraubengangzylinder mit einem keramischen, pulverförmigen Material gefüllt. Dieses Material versintert porös im späteren Einsatztemperaturbereich, so daß auch nach einem Wiedereinsatz des Drehplungers der gesamte ausgefüllte Hohlraum einen ständigen Luftaustausch gewährleistet. Das keramische Material wird durch die Öffnung an der Drehplungerhalterung in den Drehplungerkernshaft eingefüllt. Durch eine oder mehrere Bohrungen im oberen Bereich des Drehplungerkernschaftes ist pulverförmiges Material in den Hohlraum zwischen Drehplungerkernschaft und Schraubengangzylinder gefüllt.

Dieser Hohlraum zwischen Plungerkernschaft und Schraubenzylinder ist mit einem keramischen Material zur Erhöhung der Festigkeit der gesamten Vorrichtung verfüllt, so daß es sich nicht um einen Mehrschichtenaufbau aus mehreren Metallen und keramischen Material lt. Stand der Technik handelt, sondern nur um ein Verfüllen eines Metall-Hohlkörpers mit einem keramischen Material.

Der Vorteil der erfindungsgemäßen Drehplunger besteht im minimierten Einsatz von Edelmetallen und Edelmetallegierungen aufgrund des erfindungsgemäßen konstruktiven Gerüstaufbaus. Durch die Verwendung von ausschließlich Edelmetallen wird der bekannte Mehrschichtenaufbeu der Drehplunger mit unterschiedlichen Metall- und Keramikmaterialien, bestehend aus Edelmetall Platin, Keramik, A1-Schicht, Molybdänkern, A1-Schicht, Keramik, Platin, vermieden. Die Lebensdauer der erfindungsgemäßen Drehplunger wird damit wesentlich erhöht.

Eine Reparatur defekter Drehplunger ist durch den einfachen konstuktiven Aufbau leicht möglich. Eine vollständige Erneuerung einzelner defekter Plungerbautele ist durch ihre Austauschbarkeit kurzfristig und zeitsparend ausführbar. Zur Erhöhung der Festigkeit der Drehplunger-Gerüstkonstruktion sind alle Hohlräume mit einem keramischen pulverförmigen Material gefüllt, das im Einsatzemperaturbereich gasdurchlässig versintert.
Die Erfindung soll anhand eines Ausführungsbeispieles näher erläutert werden.
In den Zeichnungen stellen dar:
Figur 1 - einen Seitenschnitt einer bekannten Plungerzelle mit Drehplunger,
Figur 2 - einen Seitenschnitt eines erfindungsgemäßen Drehplungers,
Figur 3 - eine geschnittene Draufsicht der Figur 2,
Figur 4 - eine geschnittene Detailansicht der Schraubengangbefestigung,
Figur 5 - eine geschnittene Detailansicht einer weiteren Schraubengangbefestigung,
Figur 6 - einen Seitenschnitt einer Drehplungerspitze,
Figur 7 - einen Seitenschnitt einer wieteren Drehplungerspitze.

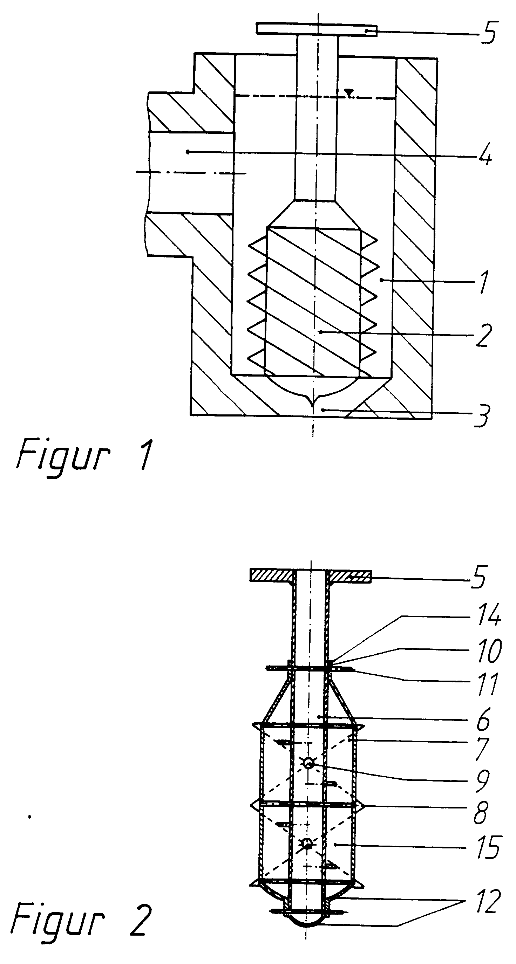

Die Figur 1 zeigt eine bekannte Plungerzelle 1, in die ein Drehplunger 2 das aus dem Zuführkanal 4 kommende Glas fördert und dadurch eine Ausstoßdüse 3 drückt. Der Drehplunger 2 ist oberhalb des Speiserkopfes mittels einer Drehplungerhalterung 5 befestigt.

Den erfindungsgemäßen konstruktiven Aufbau eines Drehplungers 2 stellt die Figur 2 dar. An der Drehplungerhalterung 5 ist der oben offene Drehplungerkernschaft 6 mit unten gerundeter Verschlußkappe 12 befestigt. Auf dem Drehplungerkernschaft 6 ist im mittleren Teil und an der Drehplungerspitze der Schraubengangzylinder 7 mittels Stiften 10 und entsprechenden Schweißnähten angebracht. Zur Stabilisierung des Schraubengangzylinders 7 sind über dessen gesamter Länge stabilisierende Rohre und/oder Profile 9 eingebracht.
Der Schraubengangzylinder 7 ist an den Enden der stabilisierenden Rohre und/oder Profile 9 befestigt. Die Schraubengänge 8 sind an der Oberfläche des Schraubengangzylinders 7 und an allen Enden der stabilisierenden Rohre und/oder Profile 9 befestigt, wobei die Steigung der Schraubengänge 8 durch die Anzahl und Anordnung der stabilisierenden Rohre und/oder Profile 9 bestimmt ist.

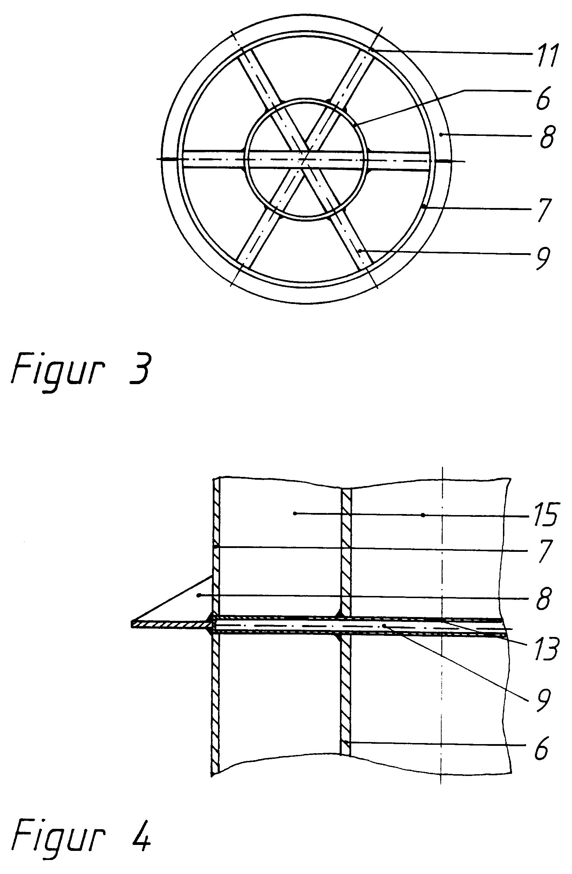

In der Figur 3 ist in einer geschnittenen Draufsicht der Drehplunger 2 dargestellt. Durch den Drehplungerkernschaft 6 sind, wie im Beispiel aufgeführt, drei stabilisierende Rohre und/oder Profile 9 um jeweils 120° versetzt befestigt und auf diesen der Schraubengangzylinder 7 mit den Schraubengängen 8.

Die Figur 4 stellt eine geschnittene Detailansicht der Befestigung der Schraubengänge 8 auf dem Schraubengangzylinder 7 dar. Jedes stabilisierende Rohr und/oder Profil 9 muß im Schraubengangzylinder 7 und im Drehplungerkernschaft 6 mehrere Ausdehnungsöffnungen 13 besitzen. Alle Hohlräume des Drehplungers 2 sind mit einem keramischen pulverförmigen Material 15 gefüllt.

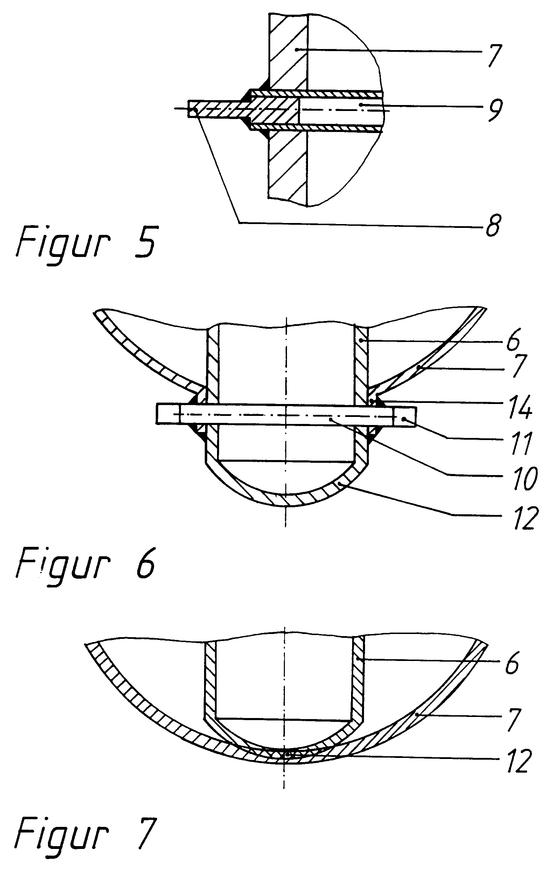

Eine weitere Befestigung der Schraubengänge 8 ist in der Figur 5 dargestellt. Die stabilisierenden Rohre und/oder Profile 9 ragen über die Oberfläche des Schraubenganzylinders 7 hinaus, zusätzliche Bolzen an den Schraubengängen 8 stecken in den stabilisierenden Rohren und/oder Profilen 9.

In den Figuren 6 und 7 sind zwei Varianten der Spitze des Drehplungers 2 dargestellt. Auf dem mit einer gerundeten Verschlußkappe 12 versehenen Drehplungerkernschaft 6 ist die Bördelkante 14 des Schraubegangzylinders 7 mit dem Drehplungerkernschaft 6 verbunden. Zusätzlich sind durch die Wandungen des Drehplungerkernschaftes 6 und der Bördelkante 14 ein oder mehrere Stifte 10 gesteckt und befestigt. Die Enden 11 der Stifte 10 sind in einem bestimmten Winkel so abgeflacht, daß das Glas gefördert bzw. homogenisiert wird.

## Patentansprüche

1. Drehplunger für Glasauslauföffnungen, bestehend aus einem Drehplungerschaft, einer Drehplungerhalterung und Schraubengängen, **dadurch gekennzeichnet**, daß
- der Drehplungerschaft, ein Schraubengangzylinder (7) mit Schraubengängen und stabilisierende Rohre und/oder Profilen (9) eine Gerüstkonstruktion aus feinkornstabilisiertem oder dispersionsverfestigtem Platin oder Platinlegierungen mit Wanddicken zwischen 0,5 ... 2,5 mm darstellen,
- der Drehplungerschaft als Drehplungerkernschaft (6) durchgängig and hohl ausgebildet ist und im Innenraum mehrere stabilisierende Rohre und/oder Profile (9) besitzt,
- der Drehplungerkernschaft (6) an dem Schraubengangzylinder (7) an dessen Enden befestigt ist und
- durch den Drehplungerkernschaft (6) hindurch die stabilisierenden Rohre und/oder Profile (9) mit ihren abgeflachten Enden (11) am Schraubengangzylinder (7) angebracht sind.

2. Drehplunger nach Anspruch 1, **dadurch gekennzeichnet**, daß er aus einem durchgängigen Drehplungerkernschaft (6) und einem darüberliegenden kürzeren Schraubengangzylinder (7) besteht.

3. Drehplunger nach Anspruch 1, **dadurch gekennzeichnet**, daß die stabilisierenden Rohre und/oder Profile (9) unterschiedlich konturenförmig ausgebildet und üer der gesamten Länge des Schraubengangzylinders (7) zueinander winklig versetzt angeordnet sind.

4. Drehplunger nach Anspruch 1 bis 3, **dadurch gekennzeichnet**, daß maximal zwei Schraubengänge (8) an den abgeflachten Enden (11) der stabilisierenden Rohre und/oder Profile (9) oder mehrere Schraubengänge (8) an jeder beliebigen Stelle der Oberfläche des Schraubengangzylinders (79 befestigt sind und die stabilisierenden Rohre und Profile (9) zu den Schraubengängen (8) gleich- und/oder gegenläufig angeordnet sind.

5. Drehplunger nach Anspruch 4, **dadurch gekennzeichnet**, daß die Breite der Schraubengänge (8) zunehmend über die Länge des Schraubengangzylinders (7) zur Ausstoßdüse (3) ist.

6. Drehplunger nach Anspruch 1 bis 4, **dadurch gekennzeichnet**, daß der Drehplungerkernschaft (6) und die stabilisierenden Rohre und/oder Profile (9) je eine oder mehrere Ausdehnungsöffnungen (13) besitzen.

7. Drehplunger nach Anspruch 1 bis 6, **dadurch gekennzeichnet**, daß die Bördelkanten (14) des Schraubengangzylinders (7) mit dem Drehplungerkernschaft (6) stellenweise verbunden und durch Stifte (10) zusätzlich gesichert sind.

8. Drehplunger nach Anspruch 7, **dadurch gekennzeichnet**, daß die Stifte (10) abgeflachte und in verschiedenen Winkeln zur Achse des Drehplungerkernschaftes (6) geformte Enden (11) besitzen.

9. Drehplunger nach Anspruch 1 bis 8, **dadurch gekennzeichnet**, daß die Hohlräume im Drehplungerkernschaft (6) und zwischen Drehplungerkernschaft (6) und Schraubengangzylinder (7) mit einem keramischen, pulverförmigen , bei hohen Temperaturen porös versinterndem Material (15) gefüllt sind.

## Claims

1. Rotary plunger for glass discharge orifices, consisting of a plunger shark, of a rotary-plunger mounting and of screw flights, characterized in that
- the rotary-plunger shank, a screw-flight cylinder (7) with screw flights and stabilizing tubes and/or profiles (9) constitute a framework structure consisting of fine-grain-stabilized and dispersion-consolidated platinum or platinum alloys and having wall thicknesses between 0.5 and 2.5 mm,
- the rotary-plunger shank is a continuous and hollow rotary-plunger core shank (6) and that several stabilizing tubes and/or profiles (9) pass centrally through it,
- the rotary-plunger core shank (6) is fastened to the ends of the screw-flight cylinder (7), and that
- the stabilizing tubes and/or profiles (9) are fastened at their flattened ends (11) through the rotary-plunger core shank (6) to the screw-flight cylinder (7).

2. Rotary plunger according to Claim 1, characterized in that it consists of a continuous rotary-plunger core shank (6) and of a shorter screw-flight cylinder (7) arranged over it.

3. Rotary plunger according to Claim 1, characterized in that the stabilizing tubes and/or profiles (9) present different contours and are arranged offset at an angle to one another over the entire length of the screw-flight cylinder (7).

4. Rotary plunger according to Claims 1 to 3, characterized in that a maximum of two screw flights (8) are fastened to the flattened ends (11) of the stabilizing tubes and/or profiles (9) or a plurality of screw flights (8) are fastened at any point on the surface of the screw-flight cylinder (7), and that the stabilizing tubes and/or profiles (9) are arranged in the same direction as and/or oppositely to the screw-flights (8).

5. Rotary plunger according to Claim 4, characterized in that the width of the screw flights (8) increases over the length of the screw-flight cylinder (7) to the discharge nozzle (3).

6. Rotary plunger according to Claims 1 to 4, characterized in that the rotary-plunger core shank (6) and the stabilizing tubes and/or profiles (9) in each case have one or more expansion orifices (13).

7. Rotary plunger according to Claims 1 to 6, characterized in that the flanged edges (14) of the screw-flight cylinder (7) are connected in places to the rotary-plunger core shank (6) and are additionally secured by means of pins (10).

8. Rotary plunger according to Claim 7, characterized in that the pins (10) have flattened ends (11) shaped at different angles to the axis of the rotary-plunger core shank (6).

9. Rotary plunger according to Claims 1 to 8, characterized in that the cavities in the rotary-plunger core shank (6) and between the rotary-plunger core shank (6) and the screw-flight cylinder (7) are filled with a ceramic pulverulent material (15) which sinters in a porous manner at high temperatures.

## Revendications

1. Plongeur rotatif pour orifices de décharge de verre, consistant d'une tige de plongeur rotatif, d'une attache de plongeur rotatif et des hélices, caractérisé en ce que
- la tige de plongeur rotatif, un cylindre d'hélice (7) avec des hélices et des tubes stabilisants et/ou des profilés (9) constituent un chevalet en platine stabilisé de grains fins ou consolidé par dispersion ou en alliages de platine, ayant une épaisseur de paroi entre 0,5 et 2,5 mm,
- la tige de plongeur rotatif est conçu comme tige de noyau de plongeur rotatif (6) traversante et creuse, étant munie dans son intérieur de plusieurs tubes stabilisants et/ou profilés,
- la tige de noyau de plongeur rotatif (6) est fixée aux bouts du cylindre d'hélice (7), et que
- les tubes et/ou profilés (9) stabilisants sont fixés par leurs bouts aplatis (11) au cylindre d'hélice (7) au travers de la tige de noyau de plongeur rotatif (6).

2. Plongeur rotatif selon revendication 1, caractérisé en ce que celui-ci consiste d'une tige de noyau de plongeur rotatif traversante (6) et d'un cylindre d'hélice (7) plus court susjacent.

3. Plongeur rotatif selon revendication 1, caractérisé en ce que les tubes et/ou profilés (9) stabilisants présentent des contours différents et sont disposés de façon décalée angulairement l'un à l'autre sur toute la longueur du cylindre d'hélice (7).

4. Plongeur rotatif selon revendication 1, caractérisé en ce que deux hélices (8) au maximum sont fixées aux bouts aplatis (11) des tubes et/ou profilés (9) stabilisants ou que plusieurs hélices (8) sont fixées à un point quelconque de la superficie du cylindre d'hélice (7), les tubes et profilés (9) stabilisants étant disposés dans le même sens et/ou dans le sens opposé aux hélices (8).

5. Plongeur rotatif selon revendication 4, caractérisé en ce que la largeur des hélices (8) est croissante vers la filière d'expulsion (3) sur la longueur du cylindre d'hélice (7).

6. Plongeur rotatif selon revendications 1 à 4, caractérisé en ce que la tige de noyau de plongeur rotatif (6) et les tubes et/ou profilés (9) stabilisants sont munis d'un seul orifice d'expansion (13) chacun ou de plusieurs de tels orifices.

7. Plongeur rotatif selon revendications 1 à 6, caractérisé en ce que les bords bridés (14) du cylindre d'hélice (7) sont reliés par endroits à la tige de noyau de plongeur rotatif (6) et arrêtés par des goupilles (10).

8. Plongeur rotatif selon revendication 7, caractérisé en ce que les goupilles (10) présentent des bouts aplatis, ces bouts étants formés avec des angles différents à l'axe de la tige de noyau de plongeur rotatif (6).

9. Plongeur rotatif selon revendications 1 à 8, caractérisé en ce que les espaces creux dans la tige de noyau de plongeur rotatif (6) et entre la tige de noyau de plongeur rotatif (6) et l'hélice (7) sont remplis d'une matériau céramique en poudre (15) se frittant poreux à des températures élevées.
